# EUROPÄISCHE PATENTSCHRIFT

(11) **EP 0 591 134 B1**
(45) Veröffentlichungstag und Bekanntmachung des Hinweises auf die Patenterteilung: **01.03.1995**
(21) Anmeldenummer: 90911781.4
(22) Anmeldetag: 08.08.1990
(51) Int. Cl.: B23B 13/12

(54) **FÜHRUNGSVORRICHTUNG FÜR STANGENFÖRMIGE WERKSTÜCKE VON DREHMASCHINEN**
GUIDE DEVICE FOR ROD-SHAPED WORKPIECES IN LATHES
DISPOSITIF DE GUIDAGE DE PIECES A USINER ALLONGEES DANS DES TOURS

(30) Priorität: 14.08.1989 DE 3926841
(43) Veröffentlichungstag der Anmeldung: 13.04.1994
(73) Patentinhaber: HAINBUCH GMBH SPANNENDE TECHNIK, D-71672 Marbach (DE)
(72) Erfinder: WELLER, Hans-Michael, D-7142 Marbach 1 (DE)
(74) Vertreter: Kastner, Hermann, Dipl.-Ing. Patentanwalt
(86) Internationale Anmeldenummer: EP9001301
(87) Internationale Veröffentlichungsnummer: WO9102613

(56) Entgegenhaltungen:
- FR-A- 2 241 378

## Beschreibung

Bei Einspindel- und Mehrspindel-Drehmaschinen werden die stangenförmigen Werkstücke durch je ein Führungsrohr an das hintere Ende der jeweiligen Arbeitsspindel der Drehmaschine herangeführt. Dort werden sie in ein Vorschubrohr eingeschoben, das innerhalb der Arbeitsspindel angeordnet ist und mit dieser umläuft. Am vorderen Ende des Vorschubrohres ist eine Vorschubzange angeordnet, die bei einer taktweise erfolgenden Vorwärtsbewegung des Vorschubrohres das stangenförmige Werkstück bis in die Spannzange der Drehmaschine hinein verschiebt. Im Gegensatz zum Vorschubrohr steht das Führungsrohr still. Deshalb ist das Führungsrohr von der Arbeitsspindel und ihrem Vorschubrohr getrennt. Eine solche Vorrichtung ist z.B. aus der FR-A-2241378 bekannt.

Da die stangenförmigen Werkstücke während eines Bearbeitungszyklus der Drehmaschine ebenfalls umlaufen, herrscht zwischen dem Werkstück und dem Führungsrohr eine relative Drehbewegung. Da das hintere Ende des Werkstückes sich im Führungsrohr frei dreht, kann das Werkstück sich an die Innenwand des Führungsrohres anlegen. Dort tritt dann unvermeidlich Abrieb auf, sowohl am Werkstück, wie auch am Führungsrohr. Um insbesondere das Führungsrohr vor größerem Abrieb zu bewahren, ist es bekannt, in das Führungsrohr eine Flüssigkeit einzuführen, durch die zwischen dem Werkstück und dem Führungsrohr bei der Drehbewegung des Werkstückes ein hydrodynamischer Lagereffekt entsteht. Dieser Lagereffekt nimmt jedoch zum vorderen Ende des Führungsrohres hin ab und ist an seinem Vorderende selbst gleich Null, weil dort die Schmier- und Kühlflüssigkeit frei in den Zwischenraum zwischen dem Führungsrohr und der Drehmaschine ausströmt. Das Werkstück ist in diesem Längenbereich nicht mehr geführt.

Die am vorderen Ende des Führungsrohres austretende Schmier- und Kühlflüssigkeit gelangt oft auch an Teile der Drehmaschine, die durch diese Flüssigkeit in ihrer Funktion beeinträchtigt werden können. Außerdem kann es sein, daß auf der Rückseite der Drehmaschine ein zumindest teilweise offener Schmiermittelkreislauf für die dort vorhandenen Maschinenteile vorhanden ist, der mit der Flüssigkeit aus dem Führungsrohr nicht vermischt werden darf. Um das gegebenenfalls zu verhindern muß die Flüssigkeit des Führungsrohres durch zusätzliche Maßnahmen, wie z.B. Spritzhauben und dergleichen, anderweitig abgeführt werden. Das verursacht einen zusätzlichen Bauaufwand und manchmal auch konstruktive Schwierigkeiten.

Der im Anspruch 1 und im Anspruch 2 angegebenen Erfindung liegt die Aufgabe zugrunde, eine Führungsvorrichtung für stangenförmige Werkstücke von Drehmaschinen zu schaffen, bei der das freie Austreten der Schmier- und Kühlflüssigkeit des Führungsrohres an der Übergangsstelle zur Drehmaschine vermieden ist.

Das Zwischenrohr, das einerseits am Vorschubrohr der Drehmaschine und andererseits am Führungsrohr dicht angeschlossen ist, sorgt dafür, daß die Schmier- und Kühlflüssigkeit, die dem Führungsrohr in seinem Anfangsbereich zugeführt wird, bis in das Vorschubrohr hinein und darin bis zur Spannzange in der Arbeitsspindel hingeleitet wird.

Wenn als Schmier- und Kühlflüssigkeit im Führungsrohr die gleiche Kühlflüssigkeit benutzt wird, die zum Kühlen der Schneidwerkzeuge der Drehmaschine eingesetzt wird, dann ist nur noch ein Schmier- und Kühlmittelkreislauf erforderlich. Dazu müssen lediglich die Vorschubzange am vorderen Ende des Vorschubrohres und die Spannzange in der Arbeitsspindel der Drehmaschine für den Durchtritt der Schmier- und Kühlflüssigkeit eingerichtet sein. Das ergibt sich meist schon aus dem üblichen Aufbau dieser Teile. Dadurch, daß die Schmier- und Kühlflüssigkeit in einem stetigen Flüssigkeitsstrom durch die Arbeitsspindel fließt, wird gleichzeitig eine Spülfunktion erreicht, die verhindert, daß Fremdkörper, insbesondere Späne, in die Spannzange und von dort in die Arbeitsspindel hineingelangen können und sich dort festsetzen können. Dadurch wird vermieden, daß beispielsweise die Oberfläche der Werkstücke zerkratzt oder beschädigt wird, oder auch, daß das einwandfreie Spannen des Werkstückes behindert wird. Beim Werkstückwechsel, bei dem die Spannzange sich öffnet und damit einen größeren Durchlaßquerschnitt freigibt, verhindert der stetige Flüssigkeitsstrom ebenfalls das Eindringen von Fremdkörpern in die offene Spannzange. Durch den stetigen Spülmittelstrom wird auch erreicht, daß solche Fremdkörper oder Schmutzteilchen durch die Austrittsöffnungen in der Vorschubzange und in der Spannzange hindurch ausgespült werden, die etwa vom hinteren Ende des Vorschubrohres oder des Führungsrohres herangeführt werden oder die z.B. durch die Vorschubzange von den Werkstücken abgelöst werden oder die beim Arbeiten der Vorschubzange als Abriebteilchen von dem Werkstück abgeschabt werden. Durch den stetigen Kühl- und Schmiermittelstrom, der als verhältnismäßig großer Mengenstrom auftritt, wird eine zusätzliche Kühlung der Arbeitsspindel erreicht. Das ist besonders bei Arbeitsspindeln mit hoher Drehzahl und/oder mit kleinem Lagerspiel von großer Bedeutung, weil dadurch das Lagerspiel von Anfang an kleiner gehalten werden kann und es sich auch während des Betriebes der Drehmaschine nicht wesentlich verändert.

Der Einsatz des Zwischenrohres hat noch den weiteren Vorteil, daß bei der Verwendung von Futterrohren im Führungsrohr das betreffende Futterrohr bis in das Zwischenrohr hinein und sogar bis in das Vorschubrohr hinein verlängert werden kann. Dadurch wird das Werkstück bis in die Nähe der Vorschubzange geführt. Das stillstehende Futterrohr seinerseits wird in dem umlaufenden Vorschubrohr durch den hydrodynamischen Lagereffekt des Schmiermittels geführt und gelagert.

Bei der Ausführungsform nach Anspruch 1, bei der das Zwischenrohr ebenso wie das Führungsrohr stillsteht, fällt der hydrodynamische Lagereffekt der Schmierflüssigkeit zwischen dem Führungsrohr und dem Werkstück nicht schon zum vorderen Ende des Führungsrohres hin ab, sondern bleibt über das Ende des Führungsrohres hinaus bis zur Kupplungsstelle mit dem Vorschubrohr erhalten.

Bei einer Ausgestaltung der Führungsvorrichtung nach Anspruch 3 wird eine bessere Trennung zwischen dem rotierenden Vorschubrohr und dem stillstehenden Zwischenrohr erreicht. Dadurch wird auch die Dichtung zwischen dem Führungsrohr und dem Zwischenrohr von willkürlichen relativen Drehbewegungen entlastet. Sie kann daher ganz nach Art von Stangendichtungen mit rein axialer Relativbewegung ausgewählt werden.

Bei einer Ausgestaltung der Führungsvorrichtung nach Anspruch 4 wird verhindert, daß Schmutzteilchen bis zur Dichtung vordringen können und möglicherweise die Lebensdauer der Dichtung vermindern können.

Bei einer nach Anspruch 5 ausgestalteten Führungsvorrichtung läßt sich das Gehäuse verhältnismäßig einfach auf die Belange der Dichtung hin ausbilden, ohne daß das im allgemeinen schon vorhandene Führungsrohr für die Aufnahme der Dichtung bearbeitet werden muß. Dadurch hat man auch eine größere Gestaltungsmöglichkeit für die Dichtung und für die Teile, die sie aufnehmen. Das Kupplungsgehäuse kann mit dem am hinteren Ende des Führungsrohres ohnehin meist vorhandenen Gewinde auf einfache Weise verschraubt werden. Dadurch ist es auch möglich, an der Übergangsstelle einen einfachen Dichtungsring einzulegen und mit diesem die Übergangsstelle abzudichten.

Im folgenden wird die Erfindung anhand zweier in der Zeichnung dargestellter Ausführungsbeispiele näher erläutert. Es zeigen:
- Fig. 1: einen Längsschnitt eines ersten Ausführungsbeispieles der Führungsvorrichtung mit einem Zwischenrohr;
- Fig. 2: einen Längsschnitt eines zweiten Ausführungsbeispieles des Führungsrohres mit einem Zwischenrohr.

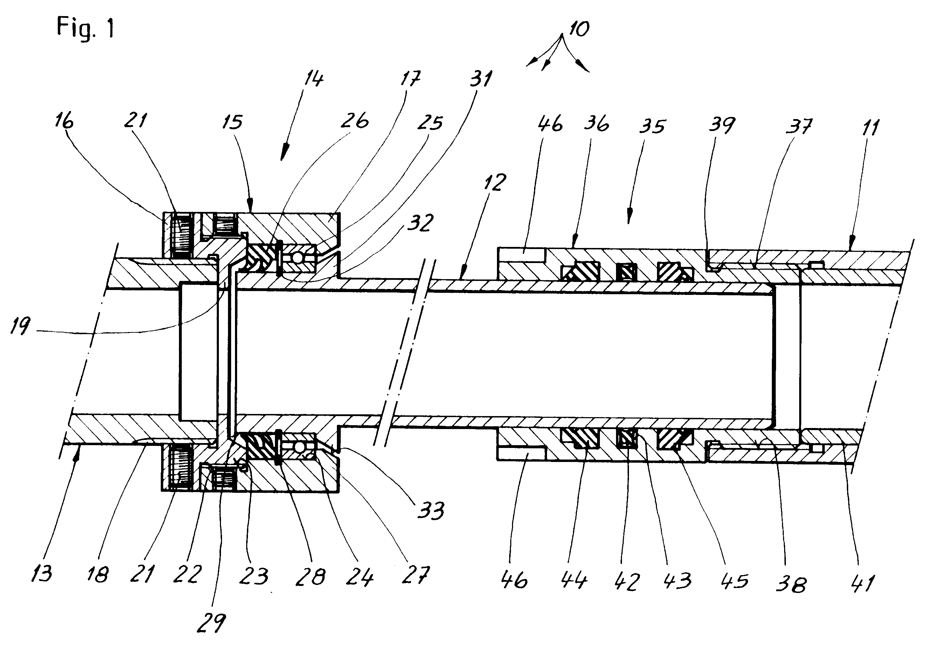

Die aus Fig. 1 ersichtliche Führungsvorrichtung 10 weist ein Führungsrohr 11 und ein Zwischenrohr 12 auf, die beide in der Fluchtlinie des Vorschubrohres 13 einer nicht dargestellten Drehmaschine angeordnet sind.

Das Zwischenrohr 12 ist an seinem dem Vorschubrohr 13 zugekehrten Ende mittels einer Kupplungsvorrichtung 14 am hinteren Ende des Vorschubrohres 13 drehbar gelagert und in axialer Richtung unverschieblich mit dem Vorschubrohr 13 gekuppelt. Zu diesem Zweck weist die Kupplungsvorrichtung 14 ein näherungsweise rohrförmiges Kupplungsgehäuse 15 auf. Es ist zweiteilig ausgebildet und weist die beiden Gehäuseteile 16 und 17 auf.

Der erse Gehäuseteil 16 ist mit einem Innengewinde versehen, das auf das Außengewinde 18 am hinteren Ende des Vorschubrohres 13 abgestimmt ist. Der Gehäuseteil 16 weist einen Innenbund 19 auf, der sich an der Stirnfläche des Vorschubrohres 13 anlegt, wenn der Gehäuseteil 16 aufgeschraubt wird. Nach dem Aufschrauben wird der Gehäuseteil 16 mittels zweier Gewindestifte 21 gesichert, die in je eine radial ausgerichtete Gewindebohrung des Gehäuseteils eingeschraubt sind die zur Vermeidung von Unwuchten diametral angeordnet sind. Der Gehäuseteil 16 ist im Längenabschnitt seines Bundes 19 zylindrisch abgesetzt und mit einem Außengewinde 22 versehen, das einen Teil der Verschraubung der beiden Gehäuseteile 16 und 17 bildet.

Auf der Innenseite des zweiten Gehäuseteils 17 sind zwei unterschiedlich ausgebildete Längenabschnitte vorhanden. Der dem ersten Gehäuseteil 16 zugekehrte Längenabschnitt ist mit einem Innengewinde 23 versehen, das auf das Außengewinde 22 am ersten Gehäuseteil 16 abgestimmt ist. Der zweite Längenabschnitt der Innenseite ist als glatte Zylinderfläche 24 ausgebildet. Sie dient der Aufnahme eines Wälzlagers 25 und eines Dichtungsringes 26. Zur Lagesicherung des Wälzlagers 25 ist auf seiner einen Seite am Gehäuseteil 16 ein Innenbund 27 vorhanden und auf der anderen Seite ein Sicherungsring 28 angeordnet, der in eine dort abgestimmte Nut der Zylinderfläche 24 eingesetzt ist.

Als weiterer Teil der Kupplungsvorrichtung 14 ist am Zwischenrohr 12 eine glatte Zylinderfläche 29 vorhanden, deren Außendurchmesser auf den Innendurchmesser des Wälzlagers 25 und des Dichtungsringes 26 abgestimmt ist. Auch hier ist zur Lagesicherung des Wälzlagers 25 auf der einen Seite ein Außenbund 31 und auf der anderen Seite ein Sicherungsring 32 vorhanden, der in eine entsprechende Nut in der Zylinderfläche 29 eingestzt ist.

Von der inneren Umfangsfläche des Innenbundes 29 am Gehäuseteil 17 ist zumindest der in axialer Richtung außengelegene Flächenabschnitt 33 als Mantelfläche eines Kegelstumpfes ausgebildet, der sich nach außen hin erweitert. Da das Kupplungsgehäuse 15 während eines Bearbeitungszyklus der Drehmaschine mit verhältnismäßig hoher Drehzahl umläuft, entsteht an dem Flächenabschnitt 33 eine nicht unbeträchtliche Schleuderwirkung, die diejenigen Schmutzteilchen nach außen abschleudert, die von außen her in den Spalt zwischen den Innenbund 29 und den Außenbund 31 gelangen. Um das Eindringen von Schmutzteilchen zusätzlich zu erschweren ist auch die Umfangsfläche 34 des Außenbundes 31 am Zwischenrohr 12 als Mantelfläche eines Kegelstumpfes ausgebildet, die auf den Flächenabschnitt 33 abgestimmt ist. Dadurch verringert sich die Spaltweite ganz beträchtlich.

An der Übergangsstelle des Zwischenrohres 12 zum Führungsrohr 11 ist eine Gleitführung 35 vorhanden. Sie ist mit dem vorderen Ende des Führungsrohres 11 drehfest und unverschieblich verbunden. In der Gleitführung 35 ist der von der Kupplungsvorrichtung 14 abgekehrte hintere Endabschnitt des Verbindungsrohres 12 längsverschiebbar geführt.

Die Gleitführung 35 weist ein rohrförmiges Gehäuse 36 auf. An seinem dem Führungsrohr 11 zugekehrten hinteren Ende ist das Gehäuse 36 abgesetzt und mit einem Außengewinde 37 versehen, das auf das Innengewinde 38 abgestimmt ist, das am vorderen Ende des Führungsrohres 11 üblicherweise vorhanden ist. In dieses Innengewinde 38 wird das Gehäuse 36 an Stelle der sonst vorhandenen Haltemuffe so fest eingeschraubt, daß das Gehäuse 36 aufgrund der Gewindereibung drehfest und durch die Gewindegänge in axialer Richtung unverschieblich mit dem Führungsrohr 11 verbunden ist. Eine Dichtungsscheibe 39 dichtet die Verbindungsstelle nach außen ab. Das Gehäuse 36 sichert damit ein im Führungsrohr 11 angeordnetes Futterrohr 41 dagegen, daß es durch die im Inneren des Futterrohres 41 hindurchgeschobenen Werkstücke nach außen aus dem Führungsrohr herausgeschoben wird, was sonst Aufgabe der Haltemuffe ist.

Der Innendurchmesser des Gehäuses 36 ist so auf den Außendurchmesser des Zwischenrohres 12 abgestimmt, daß sich ein Laufsitz ergibt. Damit durch diesen Ringspalt die Kühl- und Schmierflüssigkeit aus dem Führungsrohr 11 nicht nach außen austreten kann, ist im Gehäuse 36 ein Dichtungsring 42 vorhanden, der in eine Umfangsnut 43 in der Innenwand des Gehäuses 36 eingesetzt. Da die Relativbewegung zwischen dem Führungsrohr 11 und dem Zwischenrohr 12 eine reine axiale Verschiebebewegung ist, ist der Dichtungsring 42 nach Art einer Stangendichtung ausgebildet.

Zur Erhöhung der Lebensdauer des Dichtungsringes 42 sind in axialer Richtung vor und hinter dem Dichtungsring 42 je ein ringförmiger Schmutzabstreifer 44 bzw. 45 angeordnet, die in eine auf ihre Querschnittsform abgestimmte Umfangsnut auf der Innenseite des Gehäuses 36 so eingesetzt sind, daß ihre Abstreiferlippe vom Dichtungsring 42 abgekehrt ist.

Damit das Gehäuse 36 mit dem Führungsrohr 11 fest verschraubt werden kann, sind an seinem vorderen Ende zwei oder vier Nuten wie bei den Nutmuttern angebracht, an denen ein Hakenschlüssel angesetzt werden kann.

Das Zwischenrohr 12 ist so lang bemessen, daß es den axialen Abstand zwischen dem Vorschubrohr 13 und dem Führungsrohr 11 zu überbrücken vermag, wenn das Vorschubrohr 13 sich in seiner vordersten Stellung befindet. Der lichte axiale Abstand zwischen der Kupplungsvorrichtung 14 am vorderen Ende des Zwischenrohres 12 und der Gleitführung 35 am vorderen Ende des Führungsrohres 12 muß dabei so groß bemessen sein, daß das Zwischenrohr 12 vom Vorschubrohr 13 um dessen größtmöglichen Vorschubweg nach hinten in das Führungsrohr 11 hineinverschoben werden kann, ohne daß die Kupplungsvorrichtung 14 und die Gleitführung 35 aneinander anstoßen. Erforderlichenfalls muß das Führungsrohr 11 nach hinten versetzt werden, um den nötigen Bewegungsweg zu schaffen.

Das Führungsrohr 11 der Führungsvorrichtung 10 hat eine verhältnismäßig große Durchlaßweite. Darin können auch solche stangenförmigen Werkstücke aufgenommen werden, deren Durchmesser kleiner als die größte Durchlaßweite des Führungsrohres 11 ist. Im Bedarfsfalle wird zur einwandfreien Führung solcher dünneren Werkstücke in das Führungsrohr 11 ein Futterrohr 41 eingesetzt, das einen auf den Außendurchmesser der betreffenden Werkstücke abgestimmten Innendurchmesser hat. Bei Drehmaschinen, bei denen die Durchlaßweite der Hauptspindel und des Vorschubrohres eine bestimmte Größe nicht überschreiten, in denen also nur Werkstücke mit verhältnismäßig kleinem Außendurchmesser verarbeitet werden, haben auch die Führungsrohre nur eine verhältnismäßig kleine Durchlaßweite. Darin ist dann im allgemeinen auch kein Futterrohr eingesetzt.

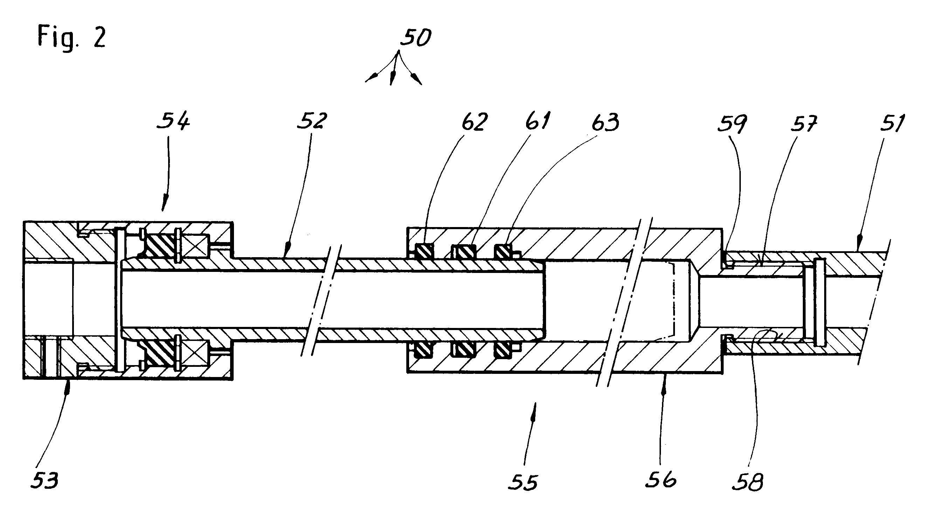

Bei der aus Fig. 2 ersichtlichen Führungsvorrichtung 50 hat das Führungsrohr 51 einen verhältnismäßig kleinen Durchmesser. Dementsprechend haben auch das Zwischenrohr 52 und das Vorschubrohr 53 der Drehmaschine ebenfalls nur einen verhältnismäßig kleinen Durchmesser.

Die Kupplungsvorrichtung 54 zwischen dem Vorschubrohr 53 und dem Zwischenrohr 52 ist, abgesehen von den kleineren Durchmessermaßen, weitgehend gleich der Kupplungsvorrichtung 14 ausgebildet. Bei der Gleitführung 55 ist das Gehäuse 56 gegenüber dem Gehäuse 36 insoweit geringfügig abgewandelt, als es stärker abgesetzt ist, damit sein Außengewinde 57 in das kleinere Innengewinde 58 am Ende des Führungsrohres 51 hineinpaßt. Auch hier ist wieder ein Dichtungsring 59 eingefügt. Im übrigen hat das Gehäuse 56 einen ausreichend großen Außendurchmesser, damit der Dichtungsring 61 und die beiden Schmutzabstreifer 62 und 63 jeweils in Normgröße verwendet werden können.

Die Führungsvorrichtung zwischen dem Führungsrohr der Werkstückzuführung und dem Vorschubrohr der Drehmaschine kann gegenüber den beiden dargestellten Ausführungsformen auch stärker abgewandelt sein. Bei der nicht dargestellten abgewandelten Ausführungsformist das Zwischenrohr mit seiner Kupplungsvorrichtung nicht nur axial unverschieblich, sondern zugleich auch drehfest mit dem Vorschubrohr der Drehmaschine verbunden. Diese Kupplungsvorrichtung weist dann kein Wälzlager auf, sondern nur eine ruhende Dichtung zwischen den beiden Teilen. Bei dieser abgewandelten Ausführungsform ist mit dem vorderen Ende des Führungsrohres wiederum eine Gleitführung mit einem rohrförmigen Gehäuse drehfest und axial unverschieblich verbunden. Da jetzt das Zwischenrohr nicht nur in der Vorschubphase der Werkstücke gegenüber der Gleitführung axial verschoben wird, sondern auch während der Bearbeitungsphase der Drehmaschine sich innerhalb der Gleitführung dreht, und zwar mit der Drehzahl der Arbeitsspindel, müssen der Dichtungsring und die beiden Schmutzabstreifer so ausgebildet oder auch so ausgewählt werden, daß sie den unterschiedlichen Relativbewegungen standhalten, auch wenn diese nur abwechselnd nacheinander auftreten.

## Patentansprüche

1. Führungsvorrichtung für stangenförmige Werkstücke von Werkzeugmaschinen mit den Merkmalen:
- es ist ein Führungsrohr vorhanden, das an dem von der Drehmaschine abgekehrten Ende verschließbar ist und das mit einem Zulauf für eine Schmier- und Kühlflüssigkeit versehen ist,
- an der Drehmaschine ist ein Vorschubrohr vorhanden, das in der Arbeitsspindel der Drehmaschine relativ zu dieser taktweise vor- und zurückbewegbar ist und mittels dessen das vom Führungsrohr herangeführte Werkstück bis in die Spannzange der Drehmaschine hinein verschiebbar ist,
**gekennzeichnet** durch die Merkmale:
- es ist ein Zwischenrohr (12) vorhanden, das sich mindestens vom hinteren Ende des Vorschubrohrs (13) aus bis mindestens zum Führungsrohr (11) hin erstreckt,
- zwischen dem Vorschubrohr (13) und dem Zwischenrohr (12) ist eine Kupplungsvorrichtung (14) vorhanden, mittels der das vordere Ende des Zwischenrohres (12) am hinteren Ende des Vorschubrohres (13) drehbar gelagert ist und axial unverschieblich mit dem Vorschubrohr (13) gekuppelt ist,
- die Kupplungsvorrichtung (14) ist gegen den Austritt der Schmier- und Kühlflüssigkeit abgedichtet,
- zwischen dem Führungsrohr (11) und dem Zwischenrohr (12) ist eine Dichtung (44) vorhanden, die eine axiale Verschiebung des hinteren Endes des Zwischenrohres (12) gegenüber dem vorderen Ende des Führungsrohres (11) ermöglicht.

2. Führungsvorrichtung für stangenförmige Werkstücke von Werkzeugmaschinen mit den Merkmalen:
- es ist ein Führungsrohr vorhanden, das an dem von der Drehmaschine abgekehrten Ende verschließbar ist und das mit einem Zulauf für eine Schmier- und Kühlflüssigkeit versehen ist,
- an der Drehmaschine ist ein Vorschubrohr vorhanden, das in der Arbeitsspindel der Drehmaschine relativ zu dieser taktweise vor- und zurückbewegbar ist und mittels dessen das vom Führungsrohr herangeführte Werkstück bis in die Spannzange der Drehmaschine hinein verschiebbar ist,
**gekennzeichnet** durch die Merkmale:
- es ist ein Zwischenrohr vorhanden, das sich mindestens vom hinteren Ende des Vorschubrohres aus bis mindestens zum Führungsrohr hin erstreckt,
- das Zwischenrohr ist an seinem vorderen Ende mit dem hineren Ende des Vorschubrohres drehfest und axial unverschieblich verbunden,
- die Verbindungsstelle zwischen dem Vorschubrohr und dem Zwischenrohr ist gegen den Austritt der Schmier- und Kühlflüssigkeit abgedichtet,
- zwischen dem Führungsrohr und dem Zwischenrohr ist eine Dichtung vorhanden, die eine Drehbewegung und eine axiale Verschiebebewegung zwischen dem Führungsrohr und dem Zwischenrohr zuläßt.

3. Führungsvorrichtung nach Anspruch 1,
**gekennzeichnet** durch das Merkmal:
- die Kupplungsvorrichtung (14) zwischen dem Vorschubrohr (13) und dem Zwischenrohr (12) ist mit einem Wälzlager (25) ausgerüstet.

4. Führungsvorrichtung nach Anspruch 1 oder 2,
**gekennzeichnet** durch das Merkmal:
- an der Übergangsstelle zwischen dem Führungsrohr (11) und dem Zwischenrohr (12) ist zumindest auf der dem Führungsrohr (11) zugekehrten Seite, bevorzugt auch auf der dem Vorschubrohr (13) zugekehrten Seite der Dichtung (42) ein Schmutzabstreifer (44; 45) angeordnet.

5. Führungsvorrichtung nach einem oder mehreren der Ansprüche 1 bis 4,
**gekennzeichnet** durch die Merkmale:
- die Dichtung (42) zwischen dem Führungsrohr (11) und dem Zwischenrohr (12) ist in einem eigenen rohrförmigen Gehäuse (36) untergebracht, das mit dem Führungsrohr (11) drehfest und axial unverschieblich verbunden ist,
- die Übergangsstelle zwischen dem Führungsrohr (11) und dem Gehäuse (36) ist gegen den Austritt der Schmier- und Kühlflüssigkeit abgedichtet.

## Claims

1. A guide device for rod-shaped workpieces in machine tools, with the following features:
- a guide pipe is provided, and can be closed at its end remote from the lathe, and is supplied with an inlet for a lubricating and cooling liquid;
- a feed pipe is provided on the lathe, and can be displaced in a timed manner in the working spindle of the lathe, forwards and backwards in relation thereto, and by means of the said feed pipe the workpiece introduced by the guide pipe can be displaced into the collet chuck of the lathe,
**characterised in that**
- an intermediate pipe (12) is provided, extending at least from the rear end of the feed pipe (13) as far as the guide pipe (11),
- a coupling device (14) is provided between the feed pipe (13) and the intermediate pipe (12), via which device the front end of the intermediate pipe (12) is rotatably mounted on the rear end of the feed pipe (13) and is coupled thereto in an axially undisplaceable manner,
- the coupling device (14) is sealed against escape of the lubricating and cooling liquid;
- a seal (44) [*sic*] is provided between the guide pipe (11) and the intermediate pipe (12), and allows axial displacement of the rear end of the intermediate pipe (12) in relation to the front end of the guide pipe (11).

2. A guide device for rod-shaped workpieces in machine tools, with the following features:
- a guide pipe is provided, and can be closed at its end remote from the lathe, and is supplied with an inlet for a lubricating and cooling liquid;
- a feed pipe is provided on the lathe, and can be displaced in a timed manner in the working spindle of the lathe, forwards and backwards in relation thereto, and by means of the said feed pipe the workpiece introduced by the guide pipe can be displaced into the collet chuck of the lathe,
**characterised in that**
- an intermediate pipe is provided, extending at least from the rear end of the feed pipe as far as the guide pipe,
- the front end of the intermediate pipe is connected to the rear end of the feed pipe in a rotationally rigid and axially undisplaceable manner,
- the point of connection between the feed pipe and the intermediate pipe is sealed against escape of the lubricating and cooling liquid;
- a seal is provided between the guide pipe and the intermediate pipe, and allows rotational movement and axial displacement between the guide pipe and the intermediate pipe.

3. A guide device in accordance with claim 1, **characterised in that** the guide device (14) between the feed pipe (13) and the intermediate pipe (12) is provided with a rolling bearing (25).

4. A guide device in accordance with claim 1 or 2, **characterised in that** a dirt scraper (44; 45) is arranged at the point of transition between the guide pipe (11) and the intermediate pipe (12), at least on the side of the seal (42) facing the guide pipe (11) and preferably also on the side of the seal (42) facing the feed pipe (13).

5. A guide device in accordance with one or more of claims 1 to 4, **characterised in that**
- the seal (42) between the guide pipe (11) and the intermediate pipe (12) is housed in a separate tubular casing (36), which is connected to the guide pipe (11) in a rotationally rigid and axially undisplaceable manner,
- the point of transition between the guide pipe (11) and the casing (36) is sealed against escape of the lubricating and cooling liquid.

## Revendications

1. Dispositif de guidage des pièces d'oeuvre ou ébauches, en forme de barres, à des machines, dans lequel :
- un tube de guidage peut être obturé à son extrémité opposée à la machine-outil et est équipé d'une amenée de liquide de graissage et/ou de refroidissement,
- la machine-outil porte un tube d'avancement qui peut être déplacé, à des moments donnés, vers l'avant ou vers l'arrière à l'intérieur de la broche de travail du tour et qui permet de faire coulisser la pièce d'oeuvre arrivant par le tube de guidage, jusqu'entre les mors du tour,
caractérisé en ce que :
- on prévoit un tube intermédiaire (12) s'étendant au moins de l'extrémité arrière du tube d'avancement (13) jusqu'à au moins le tube de guidage (11),
- entre le tube d'avancement (13) et le tube intermédiaire (12) se trouve un dispositif d'accouplement (14) permettant de faire tourner l'extrémité avant du tube intermédiaire (12) sur l'extrémité arrière du tube d'avancement (13), et est accouplé, mais sans possibilité de coulissement axial, avec le tube d'avancement (13),
- le dispositif d'accouplement (14) est étanche contre toute sortie du liquide de graissage ou de refroidissement,
- entre le tube de guidage (11) et le tube intermédiaire (12) se trouve un joint d'étanchéité (44) permettant un coulissement axial de l'extrémité arrière du tube intermédiaire (12) par rapport à l'extrémité avant du tube de guidage (11).

2. Dispositif de guidage de pièces d'oeuvre en forme de barres, à des machines-outils, dans lequel :
- un tube de guidage peut être obturé à son extrémité opposée à la machine-outil et est équipé d'une amenée de liquide de graissage et/ou de refroidissement,
- la machine-outil porte un tube d'avancement qui peut être déplacé, à des moments donnés, vers l'avant ou vers l'arrière à l'intérieur de la broche de travail du tour et qui permet de faire coulisser la pièce d'oeuvre arrivant par le tube de guidage, jusqu'entre les mors du tour,
caractérisé en ce que:
- on prévoit un tube intermédiaire au moins de l'extrémité arrière du tube d'avancement jusqu'à au moins le tube de guidage,
- le tube intermédiaire est solidaire en rotation mais sans coulissement axial, par son extrémité avant, avec l'extrémité arrière du tube d'avancement,
- la zone de liaison des tubes d'avancement et intermédiaire est étanche contre toute sortie du liquide de graissage et de refroidissement,
- entre le tube de guidage et le tube intermédiaire se trouve un joint d'étanchéité permettant la rotation et le coulissement axial entre le tube de guidage et le tube intermédiaire.

3. Dispositif de guidage selon la revendication 1, caractérisé en ce que :
- le dispositif d'accouplement (14) entre le tube d'avancement (13) et le tube intermédiaire (12) est équipé d'un roulement à rouleaux (25).

4. Dispositif de guidage selon la revendication 1 ou 2, caractérisé en ce qu'un racleur anti-salissure (44, 45) est monté au niveau du passage entre le tube de guidage (11) et le tube intermédiaire (12), au moins du côté tourné vers le tube de guidage (11) mais de préférence tourné vers le tube d'avancement (13) du joint d'étanchéité (42).

5. Dispositif d'amenée selon une ou plusieurs des revendications 1 à 4, caractérisé en ce que :
- le joint d'étanchéité (42) entre le tube de guidage (11) et le tube intermédiaire (12) est monté à l'intérieur d'un boîtier individuel tubulaire (36), solidaire en rotation du tube de guidage (11), mais sans possibilité de coulissement axial,
- la zone de passage entre le tube de guidage (11) et le boîtier (36) est étanche contre les sorties du liquide de graissage et de refroidissement.
